# EUROPÄISCHE PATENTSCHRIFT

(11) **EP 1 962 006 B1**
(45) Veröffentlichungstag und Bekanntmachung des Hinweises auf die Patenterteilung: **31.03.2010**
(21) Anmeldenummer: 07003653.8
(22) Anmeldetag: 22.02.2007
(51) Int. Cl.: F16L 3/10

(54) **Rohrschelle**
Pipe clamp
Collier de tuyau

(43) Veröffentlichungstag der Anmeldung: 27.08.2008
(73) Patentinhaber: Secura Services AG, 8401 Winterthur (CH)
(72) Erfinder: Müller, Harald, 65719 Hofheim-Wallau (DE); Hagemann, Ludbert, 91608 Geslau (DE)
(74) Vertreter: Erb, Henning

(56) Entgegenhaltungen:
- EP-A- 0 188 649
- DE-U1- 29 704 780
- FR-A1- 2 571 465

## Beschreibung

Die vorliegende Erfindung befasst sich mit einer Rohrschelle, mit einem umlaufenden Bügel mit einer von einem ersten und einem zweiten jeweils radial vorspringenden Flansch begrenzten Einführöffnung, einem Befestigungselement und wenigstens einer zwischen den Flanschen einspannbaren Spannschraube, die an ihrem Fuß durch eine an dem ersten Flansch als Langloch ausgebildete erste Öffnung in einem an dem freien Ende des ersten Flansches schwenkbar gehaltenen Einschraubfuß gehalten ist und mit ihrem Schraubenkopf in eine zweite Öffnung im zweiten Flansch einhakbar ist, wobei der Einschraubfuß schwenkbar gehalten ist und der Einschraubfuß einen hammerförmigen Vorsprung aufweist, der die Ränder des Langloches hintergreift, und der Querschnitt des hammerförmigen Vorsprungs durch die Langlochöffnung einführbar ist.

Rohrschellen werden zur Befestigung von Rohrleitungen verwendet, wobei das zu befestigende Rohr in der Regel in einer bügelförmigen Schelle gehalten wird, die ihrerseits an einer tragenden Struktur montiert ist. Üblicherweise erfolgt die Montage an der Wand oder Decke vor der Befestigung des Rohres. Besondere Aufmerksamkeit erfordert das Einlegen des Rohres in die Schelle und das anschließende Schließen und Anziehen der Rohrschelle. Da Rohrschellen oftmals auf Leitern oder Gerüsten stehend über Kopf montiert werden, ist vor allem darauf zu achten, dass sich keine Teile lösen und herabfallen können. Weiter sind diejenigen Rohrschellen von Vorteil, bei denen die Schelle nach dem Einlegen des Rohrs möglichst einfach provisorisch geschlossen werden kann. Besonders günstig sind dabei Schellentypen, die eine Ein-Mann-Montage erlauben, d. h. bei denen keine zusätzlichen Monteure zum Halten des Rohrs oder der Schelle benötigt werden. Es sind daher Lösengen bekannt, bei denen die Rohrschelle als Ganzes vorgefertigt wird, ist und der offene Bügel art dem anderen Bügel einhakbar ist, um die Schelle provisorisch zu schließen. Beispielswiese zeigt die DE 3436710 C2 eine Rohrschelle der einganges beschriebenen Art. Zum unverlierbaren Halten des Einschraubfußes und der in diesen eingedrehten Schraube ist in der DE 3436710 C2 an dem einen Flansch eine abstehende Lasche vorgesehen, die durch eine Öffnung des aufgesetzte Einschraubfußes ragt. Bei der Herstellung der Rohrschelle ergibt sich der Nachteil, dass nach dem Aufsetzen des Einschcaubfußes ein separater Arbeitsschritt erforderlich ist, bei dem zur Fixierung des Einschraubfußes die Lasche durch eine plastische Verformung aufgeweitet wird, so dass der Einschraubfuß nicht mehr abgezogen werden kann, wobei der separate Arbeitsschrift einen nicht unerheblichen Kostenfaktor bei der Herstellung darstellt. Es hat sich weiter gezeigt, dass die Schwenkbewegung des Einschraubfußes beeinträchtigt werden kann, was bei der Montage hinderlich sein kann und damit unnötige Kosten hervorrufen kann.

Eine Rohrschellen der eingangs genannten Art ist aus der EP 0 188 649 A1 bekannt. Der Vorteil einer solchen Rohrschelle besteht darin, dass die einzelnen Teile der Rohrschelle zunächst alle abschließend vorgefertigt werden können. Für das Zusammenfügen sind dann keine aufwendigen, bearbeitenden Arbeitsschritte mehr erforderlich. Da der Einschraubfuß bereits durch das Hintergreifen der Öffnungsränder gehalten ist, sind keine separaten Arbeitsschritte erforderlich. Das Hintergreifen der Öffnungsränder mit dem harrunerförmigen Vorsprung ergibt zudem eine gute Schwenkbarkeit der Spannschraube, so dass der Monteur den Schraubenkopf, für das provisorische Schließen der Rohrschelle leichter einhaken kann. Eine weitere Rohrschelle ist aus der DE 297 04 780 01 bekannt.

Die Aufgabe der vorliegenden Erfindung besteht darin, eine günstig herzustellende Rohrschelle zu schaffen, welche die Montage vereinfacht.

Erfindungsgemäß ist die Spannschraube aus einer Lage normal zum ersten Flansch mit dem Schraubenkopf zu dem radialen inneren Ende der zweiten Öffnung im zweiten Flansch schwenkbar und der erste Flansch weist eine Von der Einführöffnung weg zeigende Umkantung auf, wobei sich das Langloch über die Umkantung hinaus bis über die Oberseite des hammerförmigen Vorsprungs des auf dem Flansch aufliegenden Einschraubfußes erstreckt. Dadurch wird vermieden, dass der hammerförmige Vorsprung im Bereich der Unterseite der Flansche hervorstehen kann, was zur folge hätte, dass der Schließvorgang der Rohrschelle behindert werden könnte. Für einen möglichst guten Sitz der Spannschraube verlaufen der erste und der zweite Flansch radial und sind in geschlossenem Zustand im wesentlichen parallel zueinander angeordnet.

Weiterhin bevorzugt ist eine Ausführungsform, bei welcher der Einschraubfuß als eine flache Halteplatte ausgebildet ist, um eine möglichst gute Einleitung der Spannkraft von der Schraube über den Einschraubfuß in die Flansche und damit in die Rohrschellenbügel zu gewährleisten. Die Halteplatte lässt sich bei einer minimalen Anzahl an Arbeitsschritten kostengünstig herstellen.

Besonders bevorzugt ist eine Ausführungsform, bei der die Halteplatte nach dem Eindrehen einer Spannschraube an dem Flansch unverlierbar gehalten ist, so dass die Rohrschelle bereits bei der Herstellung fertig vormontiert werden kann. Die Halteplatte mit der Schraube kann während des Transports oder der Lagerung nicht abhanden kommen. Dies ergibt neben einer einfacheren Handhabung und der Tatsache, dass die Rohrschelle auf der Baustelle stets komplett ist, auch Vorteil bei der Logistik und der Lagerhaltung. Vorzugsweise ist die Spannschraube gegen ein Herausdrehen aus dem Einschraubfuß gesichert, beispielsweise durch Verformung des Gewindeschaftendes, Aufbringen eines Klebstoffs oder Setzen eines Schweißpunkts am Gewindeschaftende.

In einer weiter bevorzugten Ausführungsform dient der hammerförmige Vorsprung als Griffstück oder ist entsprechend ausgebildet, wobei mittels des Griffstücks die Halteplatte um ihre Schwenkachse manuell verschwenkbar ist. Dadurch kann die Spannschraube bei der Montage durch den Monteur leichter in der zweiten Öffnung eingehakt werden. Dies vereinfacht die Montage insbesondere bei einer stehenden Montage oder einer seitlichen Montage der Rohrschelle mit nach oben ausgerichteter Einführöffnung, wenn die Spannschraube aufgrund ihres Eigengewichts eher die Tendenz hat, von der Einführöffnung weg zu pendeln. Auch das Herausschwenken der Schraube aus der Lage normal zu den Flanschen kann manuell unterstützt werden. Für die Ausbildung als Griffstück reich es bereits aus, wenn der hammerförmig Vorsprung soweit herausragt, dass auf ihn mit der Fingerspitze eine leichte Kraft aufgebracht werden kann. Vorzugsweise sind die Kanten abgerundet oder zumindest entgratet.

Vorzugsweise erstreckt sich die zweite Öffnung in den Sichellenbügel hinein und geht dort in eine Erweiterung über, die etwas breiter und höher als der Schraubenkopf ist, um den Schraubenkopf zum Einhaken möglichst einfach in die Öffnung einführen zu können.

Zweckmäßigerweise weisen die seitlichen Ränder der zweiten Öffnung auf der der Einführöffnung abgewandten Seite des zweiten Flansches vor dem Übergang der zweiten Öffnung in den Schellenbügel Erhebungen auf. Bereits bei einer keinen, auf die Schelle in Öffnungsrichtung wirkenden Kraft verhindern die Erhebungen zuverlässig ein versehentliches Herausrutschen des Schraubenkopfes. Wenn beispielsweise bei einer abhängend montierten Rohrschelle das Rohr in die Einführöffnung eingefügt und die Rohrschelle durch Einhaken des Schraubenkopfes provisorisch geschlossen wird, liegt das Rohr auf der unteren Bügelhälfte auf und drückt diese nach unten, was wiederum dazu führt, dass der zweite Flansch gegen den Schraubenkopf gedrückt wird, so dass dieser durch die Erhebungen zuverlässig gehalten ist und nicht aus der Öffnung rutschen kann.

In einer weiter bevorzugten Ausführungsform ist der umlaufenden Bügel zweiteilig und die zwei Bügelhälften sind gegenüber der Einführöffnung gelenkartig verbunden. Dadurch kann die Rohrschelle beispielsweise zunächst an der tragenden Struktur befestig werden und das zu befestigende Rohr danach in die Rohrschelle eingeführt werden, indem die Einfuhröffnung aufgeweitet wird. Die Verbindung des zweiteiligen Bügels kann z. B. durch eine Gelenkverbindung erfolgen, bei der eine Lasche der einen Hälfte in eine Ausnehmung der anderen Hälfte eingreift und die Öffnungsränder hintergreift.

In einer besonders anwenderfreundlichen Ausführungsform ist der zweiteilige Bügel auf der Innenseite mit einer einstückigen elastischen Einlage versehen, die auf die Bügelhälften eine Federkraft ausübt und bestrebt ist, die Bügelhälften auseinander zu drücken. Elastische Einlagen sind bekannt und übernehmen die schalltechnische Funktion, das Rohr gegenüber der Halterung und der tragenden Struktur abzufedern und möglichst wenig Schwingungen, d. h. Körperschall zu übertragen. Aufgrund der auseinandergedrückten Bügelhälften kann der Monteur das zu befestigende Rohr in die bereits montierte Rohrschelle einlegen, ohne die Einführöffnung der Rohrschelle erst aufweiten zu müssen.

Nachfolgend wird, anhand der beigefügten Zeichnungen näher auf ein Ausführungsbeispiel der Erfindung eingegangen. Es zeigen:
- Fig. 1: eine Ansicht einer Rohrschelle;
- Fig. 2: eine Seitenansicht der Rohrschelle nach Fig. 1;
- Fig. 3: eine Draufsicht der Rohrschelle nach Fig. 1;
- Fig. 4: eine Ansicht der Rohrschelle nach Fig. 1 in einer halb geöffneten Stellung und
- Fig. 5: eine perspektivische Ansicht des in Fig. 4 gezeigten Flansches mit der verschwenkten Schraube in einem größeren Maßstab.

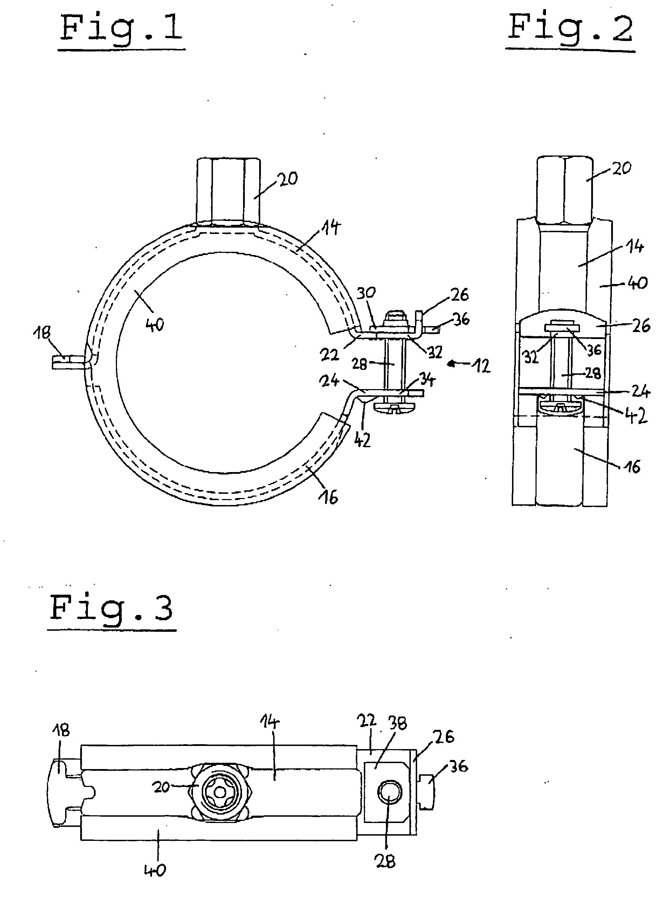

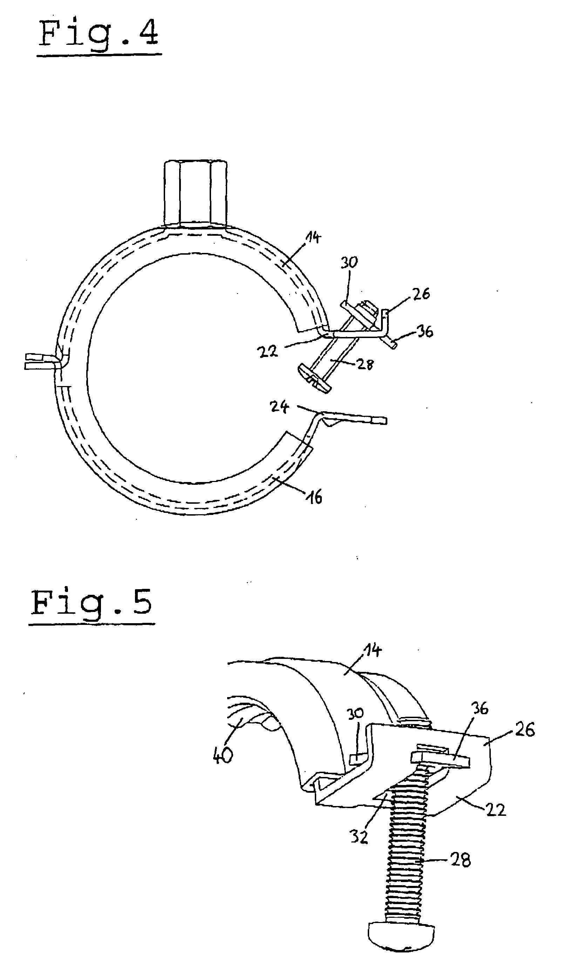

Fig. 1 zeigt eine Rohrschelle in einer Seitenansicht. Die Rohrschelle weist einen umlaufenden Bügel mit einer Einführöffnung 12 zum Einlegen eines nicht gezeigten Rohres auf, wobei die Rohrschelle in Fig. 1 geschlossen dargestellt ist. Die Einführöffnung 12 kann mindestens bis auf den Durchmesser der größten Rohre aufgeweitet werden, für welche die Rohrschelle vorgesehen ist. Der umlaufende Bügel besteht aus einer ersten Bügelhälfte 14 und einer zweiten Bügelhälfte 16, wobei gegenüber der Einführöffnung 12 eine gelenkige Verbindung 18 vorgesehen ist, mit der die zweite Bügelhälfte 16 mit der ersten Bügelhälfte 14 verbunden ist. Die gelenkartige Verbindung 18 ermöglicht ein Verschwenken der Bügelhälften 14, 16. In Fig. 4 befinden sich die Bügelhälften 14, 16 beispielsweise in einem leicht geöffneten Zustand.

Zur Befestigung an einer nicht gezeigten Tragstruktur ist an der ersten Bügelhälfte 14 ein Befestigungselement 20 mit einem Innengewinde vorgesehen. Zur Ausrichtung der Rohrschelle ist das Befestigungselement 20 auf der Außenseite sechskantförmig ausgebildet, um ein Werkzeug, z. B. einen Maulschlüssel oder eine Zange ansetzen zu können.

Die erste 14 und die zweite Bügelhälfte 16 sind an der Einführöffnung mit einem ersten Flansch 22 und einem zweiten Flansch 24 ausgebildet, die jeweils radial nach außen hervorspringen, wobei der erste Flansch 22 eine von der Einführöffnung 12 weg zeigende Umkantung 26 aufweist.

Die beiden Flansche 22, 24 sind mit einer Spannschraube 28 verbunden, die an ihrem Gewindeschaftende in einem Einschraubfuß 30 gehalten ist. Dabei ragt die Spannschraube 28 durch eine an dem ersten Flansch 22 als Langloch 32 ausgebildete erste Öffnung. Der Kopf der Spannschraube 28 ist in Fig. 1 in einer zweiten Öffnung 34 am zweiten Flansch 24 eingehakt.

Der Einschraubfuß 30 ist an dem freien Ende des ersten Flansches 22 derart schwenkbar gehalten, dass die Spannschraube 28 aus einer Lage normal zum ersten Flansch 22 mit ihrem Kopf zu dem radialen inneren Ende der zweiten Öffnung 34 im zweiten Flansch 24 geschwenkt werden kann (siehe Fig. 4). Dazu ist an dem Einschraubfuß 30 ein hammerförmiger Vorsprung 36 vorgesehen, dessen Querschnitt zum Einsetzen des Einschraubfußes 30 durch die Öffnung des Langlochs 32 eingeführt wird. Danach wird der hammerförmige Vorsprung 36 in seine endgültige Lage gedreht, in welcher er die Ränder des Langlochs 32 hintergreift (siehe Fig. 3). Der Einschraubfuß ist beispielhaft als eine flache Halteplatte 38 ausgebildet, die ein Gewinde aufweist und durch Eindrehen der Spannschraube 28 an dem ersten Flansch 22 unverlierbar gehalten ist. Durch den hammerförmigen Vorsprung 36 ergeben sich Vorteile bei der Herstellung der erfindungsgemäßen Rohrschelle, da das Einsetzen des Einschraubfußes in der Regel nach der Fertigstellung der einzelnen Teile erfolgt und keine zusätzlichen Arbeitsschritte notwendig sind, wie beispielsweise ein Umbiegen oder Aufweiten einer Lasche. Sobald die Spannschraube 28 durch das Langloch 32 im ersten Flansch 22 in den Einschraubfuß 30 eingedreht wird, ist dieser gegen Herausfallen gesichert, da die Spannschraube 28 die Bewegungsfreiheit des Einschraubfußes begrenzt. Beim Verschwenken des Einschraubfußes 30 bildet der radiale innere Rand des Langlochs 32 eine Art Anschlag für den Schaft der Spannschraube 28. In Fig. 4 befindet sich der Schaft kurz vor dem Rand des Langlochs 32. Durch Anschlagen an diesem Rand wird der Einschraubfuß 30 daran gehindert, eine Position einzunehmen, in welcher der hammerförmige Vorsprung 36 die Ränder des Langlochs 32 nicht mehr hintergreift und durch die Öffnung des Langlochs 32 bewegt werden könnte. Nach dem Eindrehen in den Einschraubfuß 30 wird die Spannschraube 28 am vorderen Ende ihres Gewindeschaftes mit etwas Klebstoff versehen, so dass die Spannschraube 28 nicht mehr unabsichtlich aus dem Einschraubfuß 30 heraus gedreht werden kann.

Für eine optimale Schwenkbewegung des Einschraubfußes 30 erstreckt sich das Langloch 32 über die Umkantung 26 hinaus und reicht bis über die Oberseite des hammerförmigen Vorsprungs 36 der auf dem ersten Flansch 22 aufliegenden Halteplatte 36, wobei der hammerförmige Vorsprung 36 die Öffnungsränder im Bereich der Umkantung 26 hintergreift (siehe auch Fig. 5). Der hammerförmige Vorsprung 36 ragt weder bei flach auf dem ersten Flansch 22 aufliegender Halteplatte 38 noch bei verschwenkter Schraube in den Bereich zwischen dem ersten und dem zweiten Flansch 22, 24, so dass der Schließvorgang nicht behindert wird und die Flansche bei einem völligen Schließen aneinander anliegen und Rohre mit einem möglichst kleinen Durchmesser aufnehmen und halten können.

Der hammerförmige Vorsprung 36 sorgt dafür, dass sich die Halteplatte 38 beim Einschrauben der Spannschraube 28 nicht dreht. Da die der Einführöffnung abgewandte Seite des ersten Flansches 14, d. h. die Oberseite in Fig. 1, auf einer Seite durch die Umkantung 26 und auf der anderen Seite durch die sich anschließende erste Bügelhälfte 14 begrenzt ist, kann ein Verdrehen alternativ oder zusätzlich durch diese Begrenzungen verhindert werden, indem die Halteplatte 38 so groß ausgebildet wird, dass sie mit Spiel zwischen die beiden Begrenzungen passt und bereits bei einer leichten Verdrehung mit ihren Kanten an den Begrenzungen anliegt.

Auf der Innenseite sind die beiden Bügelhälften 14 ,16 mit einer einstückigen elastischen Einlage 40 versehen. Diese übt auf die beiden Bügelhälften 14, 16 eine Federkraft aus, welche die Bügelhälften 14, 16 in einem offenen Zustand hält, wenn die Spannschraube 28 noch nicht eingehakt ist. Die Einlage 40 umgreift die seitlichen Ränder der beiden Bügel 14, 16, so dass ein Kleben oder sonstiges Befestigen der Einlage an den Bügeln nicht erforderlich ist.

Um den Kopf der Spannschraube 28 in der zweiten Öffnung 62 einhaken zu können, ist letztere mit einer Erweiterung ausgebildet, die etwas breiter und höher als der Schraubenkopf ist. Um die Schraube mit ihrem Kopf in die zweite Öffnung 21 einschwenken zu können, ragt die zweite Öffnung 34 in den zweiten Bügel 16 hinein und geht dort in die Erweiterung über.

Die seitlichen Ränder der zweiten Öffnung 34 sind auf der der Einführöffnung 12 abgewandten Seite des zweiten Flansches 24, in Fig. 1 also auf Unterseite, vor dem Übergang der zweiten Öffnung 34 in den zweiten Bügel 16 mit Erhebungen 42 versehen. Letztere verhindern, dass die Spannschraube 28 nach dem Einhaken mit ihrem Kopf versehentlich wieder aus der zweiten Öffnung 34 heraus geschwenkt wird. Die Erhebungen 42 lassen sich z. B. einfach dadurch anfertigen, dass jeweils ein kleiner Abschnitt des Randes der zweiten Öffnung 34 von der Einführöffnung weg, d. h. schräg nach unten, gebogen wird. Dies kann beispielsweise während des Ausstanzvorgangs der zweiten Öffnung 34 erfolgen. Auf derjenigen Seite des zweiten Flansches, die der Einführöffnung 12 zugewandt ist, bilden sich dadurch schräge Einlaufflächen, die den Montagevorgang vor allem dann erleichtern, wenn die Rohrschelle von unten an einer tragenden Struktur, d. h. hängend montiert wird. Aufgrund des Eigengewichts der Spannschraube 28 hat diese nämlich das Bestreben, senkrecht nach unten zu hängen, was sich anhand Fig. 4 nachvollziehen lässt. Lässt man dort die verschwenkt gezeigte Spannschraube 28 los, hat diese aufgrund des Eigengewichts das Bestreben, eine lotrechte Position einzunehmen. Da der Einschraubfuss 30 schwenkbar gehalten ist, wird dieser mit seinern freien Ende, d. h. in Fig. 4 mit dem linken, nach oben abstehenden Ende, nach unten schwenken und auf der Oberseite des ersten Flansches 22 plan aufliegen, da die Spannschraube 28 in dieser Stellung senkrecht angeordnet ist. Dieses Verhalten wird genutzt, um die untere Bügelhälfte 16 provisorisch an der oberen Bügelhälfte zu befestigen, indem die Spannschraube 28 durch das lotrechte Ausrichten mit ihrem Kopf hinter die Erhebungen 42 schwenkt.

Da bei einer stehenden Montage der Rohrschelle oder einer seitlichen Montage mit nach oben ausgerichteter Einführöffnung 12 die Spannschraube 28 aufgrund ihres Eigengewichts eher die Tendenz hat, von der Einführöffnung 12 weg zu pendeln, ist der hammerförmige Vorsprung 36 als Griffstück ausgebildet, mittels dessen die Halteplatte 38 um ihre Schwenkachse manuell verschwenkbar ist. Bei der Montage kann der Monteur die Spannschraube 28 durch Betätigen des hammerförmigen Vorsprungs 36 leicht in die zweite Öffnung 34 eingehakt werden. Da die Hebelkräfte sehr gering sind, reicht es bereits, wenn der hammer-förmige Vorsprung 36 soweit herausragt, dass auf ihn mit der Fingerspitze eine leichte Kraft aufgebracht werden kann. Umgekehrt kann auch das Aufschwenken der Schraube vor dem Einhaken manuell unterstützt werden.

Um den Monteur vor Verletzungen zu schützen, sollten die Kanten des hammerförmigen Vorsprungs 36 abgerundet oder zumindest entgratet sein. Bei der Dimensionierung des hammerförmigen Vorsprungs 36 kann die eventuelle Benutzung von Sicherheitshandschuhen berücksichtigt werden.

Zum Einführen der Schraube in die Erweiterung der zweiten Öffnung 34 drückt der Monteur die beiden Bügelhälften leicht zusammen. Der Schraubenkopf liegt dann an den Einlaufschrägen an und wird bei einem weiteren Zusammendrücken nach innen verschwenkt, also in Richtung der Erweiterung. Sobald er die Erweiterung erreicht hat, wird der Schraubenkopf aufgrund der Schwerkraft, die ja die Schraube 28 in eine senkrechte Lage bewegt, in die Erweiterung eingeführt und gelangt hinter die Erhebungen 42. Wenn der Monteur die an einem tragenden Untergrund montierte Rohrschelle nun loslässt, drückt die elastische Einlage 40 die Bügelhälften 14, 16 auseinander. Durch die Erhebungen 42 wird der Schraubenkopf daran gehindert, die zweite Öffnung 34 unbeabsichtigt wieder zu verlassen.

Das Rohr ist somit provisorisch gehalten, so dass der Monteur das entsprechende Werkzeug greifen kann, z. B. einen Schraubendreher, um die Spannschraube 28 in das Gewinde der Halteplatte 38 einzudrehen und zu spannen. Durch das Eindrehen der Spannschraube 28 werden die beiden Bügelhälften 14, 16 weiter geschlossen und wirken so über die Einlage 40 eine Haltekraft auf das Rohr aus.

## Patentansprüche

1. Rohrschelle, mit einem umlaufenden Bügel mit einer von einem ersten und einem zweiten jeweils radial vorspringenden Flansch (22, 24) begrenzten Einführöffnung (12), einem Befestigungselement (20) und wenigstens einer zwischen den Flanschen (22, 24) einspannbaren Spannschraube (28), die an ihrem Fuß durch eine an dem ersten Flansch (22) als Langloch (32) ausgebildete erste Öffnung in einem an dem freien Ende des ersten Flansches (22) schwenkbar gehaltenen Einschraubfuß (30) gehalten ist und mit ihrem Schraubenkopf in eine zweite Öffnung (34) im zweiten Flansch (24) einhakbar ist, wobei der Einschraubfuß (30) schwenkbar gehalten ist und der Einschraubfuß (30) einen hammerförmigen Vorsprung (36) aufweist, der die Ränder des Langlochs (32) hintergreift, und der Querschnitt des hammerförmigen Vorsprungs (36) durch die Langlochöffnung (32) einführbar ist, **dadurch gekennzeichnet, dass** die Spannschraube (28) aus einer Lage normal zum ersten Flansch (22) mit dem Schraubenkopf zu dem radialen inneren Ende der zweiten Öffnung (34) im zweiten Flansch (24) schwenkbar ist, und der erste Flansch (22) eine von der Einführöffnung (12) weg zeigende Umkantung (26) aufweist, wobei sich das Langloch (32) über die Umkantung (26) hinaus bis über die Oberseite des hammerförmigen Vorsprungs (36) des auf dem Flansch (22) aufliegenden Einschraubfußes (30) erstreckt.

2. Rohrschelle nach Anspruch 1 oder 2, **dadurch gekennzeichnet, dass** der Einschraubfuß (30) als eine flache Halteplatte (38) ausgebildet ist.

3. Rohrschelle nach Anspruch 3, **dadurch gekennzeichnet, dass** die Halteplatte (38) nach dem Eindrehen der Spannschraube (28) an dem ersten Flansch (22) unverlierbar gehalten ist.

4. Rohrschelle nach Anspruch 3 oder 4, **dadurch gekennzeichnet, dass** der hammerförmige Vorsprung (36) als Griffstück dient oder entsprechend ausgebildet ist, wobei mittels des Griffstücks die Halteplatte (38) um ihre Schwenkachse manuell verschwenkbar ist.

5. Rohrschelle nach einem der vorhergehenden Ansprüche, **dadurch gekennzeichnet, dass** die zweite Öffnung (34) sich bis in den Schellenbügel hinein erstreckt und dort in eine Erweiterung übergeht, die etwas breiter und höher als der Schraubenkopf ist.

6. Rohrschelle nach Anspruch 6, **dadurch gekennzeichnet, dass** die seitlichen Ränder der zweiten Öffnung (34) auf der der Einführöffnung (12) abgewandten Seite des zweiten Flansches (24) vor dem Übergang der zweiten Öffnung (34) in den Schellenbügel Erhebungen (42) aufweisen.

7. Rohrschelle nach einem der vorhergehenden Ansprüche, **dadurch gekennzeichnet, dass** der umlaufende Bügel zweiteilig ist und die zwei Bügelhälften (22, 24) gegenüber der Einführöffnung (12) gelenkig verbunden sind.

8. Rohrschelle nach Anspruch 8, **dadurch gekennzeichnet, dass** der zweiteilige Bügel auf der Innenseite mit einer einstückigen elastischen Einlage (40) versehen ist, die auf die Bügelhälften (22, 24) eine Federkraft ausübt, die bastrebt ist, die Bügelhälften (22, 24) auseinander zu drücken.

## Claims

1. A pipe clamp, with an annular strap having an insertion opening (12) bounded by a first and a second respective radially projecting flange (22,24), with a fastening element (20) and at least one tightening screw (28) which can be clamped between the flanges (22,24) and which is retained at its foot by a first opening, which is formed in the first flange (22) as a slot (32), in a screw-in foot (30) retained pivotably at the free end of the first flange (22) and which can be hooked with its screw head in a second opening (34) in the second flange (24), wherein the screw-in foot (30) is retained pivotably and the screw-in foot (30) has a hammer-like projection (36) which engages behind the edges of the slot (32), and the cross-section of the hammer-like projection (36) can be inserted through slot opening (32), **characterised in that** the tightening screw (28) can pivot from a position normal to the first flange (22) with the screw head to the radial inner end of the second opening (34) in the second flange (24), and the first flange (22) has a turned-up edge (26) facing away from the insertion opening (12), wherein the slot (32) extends over the turned-up edge (26) to beyond the upper end of the hammer-like projection (36) of the screw-in foot (30) resting on the flange (22).

2. A pipe clamp according to Claim 1 or 2 [sic], **characterised in that** the screw-in foot (30) is in the form of a flat retaining plate (38).

3. A pipe clamp according to Claim 3, **characterised in that** the retaining plate (38) is retained captive on the first flange (22) after the screwing-in of the tightening screw (28).

4. A pipe clamp according to Claim 3 or 4 [sic], **characterised in that** the hammer-like projection (36) serves as a grip or is correspondingly shaped, wherein the retaining plate (38) can be pivoted manually by means of the grip.

5. A pipe clamp according to any one of the preceding Claims, **characterised in that** the second opening (34) extends into the clamp strap and merges therein into a widened portion which is slightly wider and higher than the screw head.

6. A pipe clamp according to Claim 6, **characterised in that** the lateral edges of the second opening (34) have raised portions (42) on the side of the second flange (24) remote from the insertion opening (12) in front of the transition of the second opening (34) into the clamp strap.

7. A pipe clamp according to any one of the preceding Claims, **characterised in that** the annular strap is in two parts and two strap halves (22,24) are joined in an articulated manner relative to the insertion opening (12).

8. A pipe clamp according to Claim 8 [sic], **characterised in that** on its inside the two-part strap is provided with a one-piece elastic insert (40) which exerts a spring force on the strap halves (22,24) .

## Revendications

1. Collier de tuyau comportant un arceau périphérique avec une ouverture d'introduction (12) délimitée par une première et une seconde bride (22, 24) radialement en saillie,
- un élément de fixation (20) et au moins une vis de serrage (28) prise entre les brides (22, 24), et dont l'extrémité est tenue par une première ouverture réalisée sous forme de trou oblong (32) dans la première bride (22), dans un talon de vissage (30) reçu de manière pivotante à l'extrémité libre de la première bride (22), et la tête de vis s'accroche dans un second orifice (34) de la seconde bride (24), le talon de vissage (30) étant maintenu de manière pivotante, et
- le talon de vissage (30) comporte une partie en saillie (36) en forme de marteau venant prendre derrière les bords du trou oblong (32), et la section de la partie en saillie (36) en forme de marteau peut s'introduire à travers l'orifice allongé (32),
**caractérisé en ce que**
- la vis de serrage (28) peut être pivotée à partir d'une position perpendiculaire à la première bride (22), par se tête, vers l'extrémité radiale intérieure du second orifice (34) de la seconde bride (24), et
- la première bride (22) comporte un bord relevé (26) dirigé du côté opposé de celui de l'orifice d'introduction (12),
- l'orifice allongé (32) s'étendant sur le bord relevé (26) jusqu'au-dessus du côté supérieur de la partie en saillie (36) en forme de marteau du talon de vissage (30) appliqué sur la bride (22).

2. Collier selon la revendication 1,
**caractérisé en ce que**
le talon de vissage (30) est réalisé sous la forme d'une plaque de retenue (38), plate.

3. Collier selon la revendication 2,
**caractérisé en ce que**
la plaque de retenue (38) est tenue de manière imperdable à la première bride (22), une fois la vis de serrage (28) vissée.

4. Collier selon la revendication 2 ou 3,
**caractérisé en ce que**
la partie en saillie (36) en forme de marteau, sert de poignée ou est réalisée de façon correspondante de façon que cette poignée permette de basculer manuellement la plaque de retenue (38) autour de son axe de pivotement.

5. Collier selon l'une des revendications précédentes,
**caractérisé en ce que**
le second orifice (34) s'étend jusqu'à l'intérieur du collier et y rejoint une partie élargie légèrement plus large et plus haute que la tête de vis.

6. Collier selon la revendication 5,
**caractérisé en ce que**
les bords latéraux du second orifice (34) comportent des bossages (42) sur le côté de la seconde bride (24) à l'opposé de l'orifice d'introduction (12), avant que le second orifice (34) ne rejoigne le collier.

7. Collier selon l'une des revendications précédentes,
**caractérisé en ce que**
l'arceau périphérique est en deux parties et les deux moitiés d'arceau (22, 24) sont reliées de manière articulée en face de l'orifice d'introduction (12).

8. Collier selon la revendication 7,
**caractérisé en ce que**
le côté intérieur de l'arceau en deux parties, est muni d'un insert élastique (40) en une seule pièce, exerçant une force de ressort sur les moitiés d'arceau (22, 24), et ayant tendance à écarter les moitiés d'arceau (22, 24).
